# EUROPÄISCHE PATENTSCHRIFT

(11) **EP 1 002 192 B1**
(45) Veröffentlichungstag und Bekanntmachung des Hinweises auf die Patenterteilung: **24.07.2002**
(21) Anmeldenummer: 98922596.6
(22) Anmeldetag: 13.03.1998
(51) Int. Cl.: F02D 33/02, F02D 23/02, F02M 35/09, F02D 41/38

(54) **VERFAHREN UND VORRICHTUNG ZUM SCHUTZ EINES TURBOLADERS**
METHOD AND DEVICE FOR PROTECTING A TURBO-SUPERCHARGER
PROCEDE ET DISPOSITIF POUR PROTEGER UN TURBOCOMPRESSEUR

(30) Priorität: 17.07.1997 DE 19730578
(43) Veröffentlichungstag der Anmeldung: 24.05.2000
(73) Patentinhaber: ROBERT BOSCH GMBH, 70442 Stuttgart (DE)
(72) Erfinder: FENCHEL, Reinhard, 75378 Bad Liebenzell (DE); RÜPING, Thomas, D-73252 Lenningen (DE)
(86) Internationale Anmeldenummer: DE9800744
(87) Internationale Veröffentlichungsnummer: WO9904150

(56) Entgegenhaltungen:
- DE-A- 4 302 339
- US-A- 5 123 246
- US-A- 5 477 827
- SCHLARB G: "ENTWICKLUNG VON ABGASTURBOLADERN UND AUFGELADENEN MOTOREN MIT MODERNEM FAHRZEUGMESSSYSTEM" MTZ MOTORTECHNISCHE ZEITSCHRIFT, Bd. 53, Nr. 10, 1. Oktober 1992, Seiten 454-460, 462, XP000305454 in der Anmeldung erwähnt

## Beschreibung

### Stand der Technik

Die vorliegende Erfindung betrifft ein Verfahren und eine Vorrichtung zum Schutz eines Turboladers einer Brennkraftmaschine gegen Zerstörung durch eine überhöhte Laderdrehzahl.

Wie aus der MTZ, Motortechnische Zeitschrift, 53 (1992) 10, Seiten 454 bis 462 hervorgeht, wird mit zunehmender Höhe und damit abfallendem Umgebungsdruck, also sinkender Luftdichte, der geforderte Ladedruck eines Turboladers nur mit einer Erhöhung der Laderdrehzahl erreicht. Hierzu wird das Waste-Gate auf der Abgasseite des Turboladers mehr geschlossen und somit die Turbine mit einer größeren Abgasmenge beaufschlagt. Damit es bei abfallendem Umgebungsdruck aber nicht zu einer den Turbolader zerstörenden Überhöhung der Laderdrehzahl kommt, wird mit einem Sensor der Atmosphärendruck gemessen und in Abhängigkeit davon der Ladedruck-Sollwert für die Regelung abgesenkt.

Gemäß der DE 43 02 339 A1 wird die höchszulässige einzuspritzende Kraftstoffmenge ausgehend von Betriebskenngrößen wie Temperatur und Druck vorgegeben. Bei einer mit einem Lader ausgerüsteten - vorzugsweise selbstzündenden - Brennkraftmaschine, wird die Ladelufttemperatur ausgehend von der Umgebungstemperatur, dem Atmosphärendruck und dem Ladedruck vorgegeben.

Ziel der vorliegenden Erfindung ist es, ein Verfahren und eine Vorrichtung der eingangs genannten Art anzugeben, die mit einer möglichst geringen Zahl an Sensoren zur Erfassung von Betriebskenngrößen auskommen, aus denen eine Schutzfunktion für den Turbolader abgeleitet wird.

### Vorteile der Erfindung

Die genannte Aufgabe wird gemäß den Merkmalen des Anspruchs 1 bzw. 6 dadurch gelöst, daß aus einem vom Ladedruck, von der Motordrehzahl und von einer der Fahrpedalstellung entsprechenden Kraftstoffmengenvorgabe abhängigen Kennfeld der Ansaugluftdruck des Laders hergeleitet wird und daß in Abhängigkeit von diesem Ansaugluftdruck ein Begrenzungswert für die der Brennkraftmaschine zugemessene Kraftstoffmenge ermittelt wird. Es wird also kein Sensor für den Ansaugluftdruck benötigt, da dieser aus anderen Betriebskenngrößen aus einem Kennfeld hergeleitet wird. Daß durch Absenkung des Ansaugluftdrucks der Turbolader nicht seine kritische Drehzahl überschreitet, wird dadurch erreicht, daß in Abhängigkeit vom Ansaugluftdruck eine Begrenzung der der Brennkraftmaschine zugemessenen Kraftstoffmenge vorgenommen wird. Durch Verringerung der Kraftstoffmenge wird die an der Turbine des Turboladers anstehende Gesamtenergie im Abgaskanal verringert. Damit wird die kritische Turboladerdrehzahl nicht erreicht. Mit dieser Funktion wird also der Turbolader vor Zerstörung durch Überschreiten seiner kritischen Drehzahl aufgrund eines abfallenden Ansaugluftdrucks geschützt, der z.B. durch ein Absinken des Atmosphärendrucks (bei einer Fahrt im Gebirge) oder auch durch eine Verschmutzung des Luftfilters zustande kommen kann.

Wird gemäß Unteransprüchen der Atmosphärendruck vor einem Luftfilter, das im Luftansaugkanal vor dem Lader angeordnet ist, zusätzlich gemessen, so kann aus der Differenz zwischen dem gemessenen Atmosphärendruck und dem Ansaugluftdruck erkannt werden, ob eine Verschmutzung des Luftfilters vorliegt.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild einer Brennkraftmaschine mit einem Turbolader und
Figur 2 ein in einem Steuergerät vorliegendes Funktionsdiagramm zur Drehzahlbegrenzung des Turboladers.

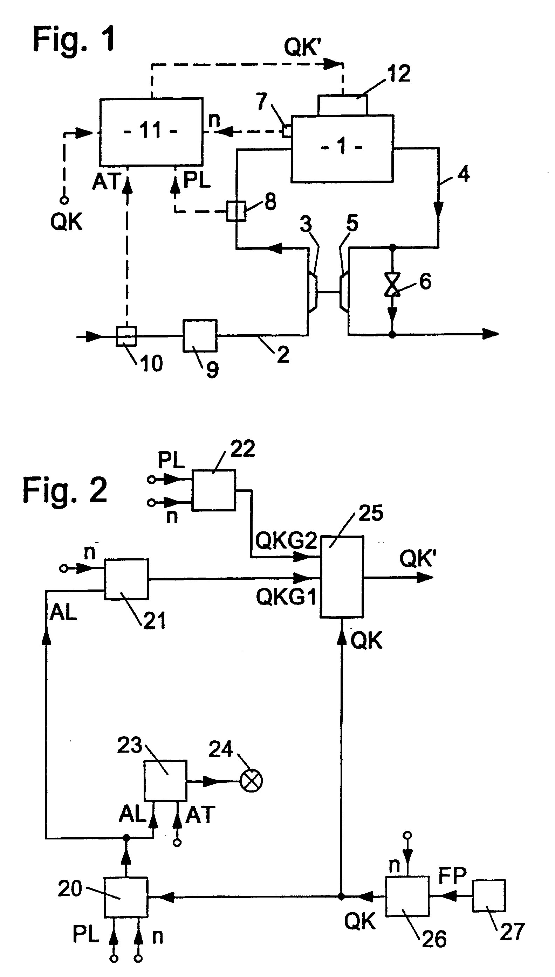

Wie dem prinzipiellen Blockschaltbild in Figur 1 zu entnehmen ist, besitzt eine Brennkraftmaschine 1 - vorzugsweise eine selbstzündende Brennkraftmaschine - in seinem Ansaugkanal 2 einen Verdichter 3 und in seinem Abgaskanal 4 eine Turbine 5 eines Abgasturboladers. Dabei ist in einem Bypasskanal der Turbine 5 ein Bypassventil 6 zu einer hier nicht näher beschriebenen Regelung oder Steuerung des Ladedrucks eingefügt. An der Brennkraftmaschine ist ein Sensor 7 zur Messung der Motordrehzahl n angeordnet. Im Ansaugkanal 2 ist auf der Druckseite des Verdichters 3 ein Sensor 8 zur Bestimmung des Ladedrucks PL angeordnet. Auf der Saugseite des Verdichters 3 befindet sich im Ansaugkanal 2 ein Luftfilter 9 und davor ein Sensor 10 zur Messung des Atmosphärendrucks AT. Einem Steuergerät 11 werden aus den genannten Größen - Motordrehzahl n, Ladedruck PL, Atmosphärendruck AT - außerdem noch die der Fahrpedalstellung entsprechende Kraftstoffmengenvorgabe QK zugeführt. Wie noch anhand von Figur 2 näher erläutert wird, ermittelt das Steuergerät 11 aus all den genannten Eingangs-Betriebskenngrößen eine begrenzte zugemessene Kraftstoffmenge QK', die einer Einspritzvorrichtung 12 zugeführt wird.

In dem Steuergerät befindet sich, wie Figur 2 zeigt, ein Kennfeld 20, aus dem in Abhängigkeit vom Ladedruck PL, der Motordrehzahl n und einer der Fahrpedalstellung entsprechenden Kraftstoffmengenvorgabe QK der Ansaugluftdruck AL zwischen dem Luftfilter 9 und dem Verdichter 3 des Turboladers abgeleitet wird. Dieser nicht durch Messen bestimmte Ansaugluftdruck AL wird einem weiteren Kennfeld 21 zugeführt, in dem in Abhängigkeit von dem Ansaugluftdruck und der Motordrehzahl n ein erster Begrenzungswert QKG1 für die der Brennkraftmaschine zuzumessende Kraftstoffmenge bestimmt wird. Auf die Höhe des Ansaugluftdrucks wird sich eine Veränderung des Atmosphärendrucks, z.B. bei einer Fahrt in ein Gebirge, auswirken. Auch eine Verschmuztung des Luftfilters wird zu einem Abfall des Ansaugluftdrucks führen. Wenn nun in Abhängigkeit vom Ansaugluftdruck die Kraftstoffmenge bemessen wird, wird der Turbolader also auch vor einer Drehzahlüberhöhung aufgrund einer Luftfilterverschmuzung geschützt.

Wenn es sich um eine selbstzündende Brennkraftmaschine handelt, ist ein Rauchbegrenzungskennfeld 22 vorgesehen, aus dem in Abhängigkeit vom Ladedruck PL und von der Motordrehzahl n ein zweiter Begrenzungswert QKG2 für die zuzumessende Kraftstoffmenge hergeleitet wird.

In einem Schaltblock 23 wird die Differenz aus dem vom Kennfeld 20 herausgelesenen Ansaugluftdruck AL nach dem Luftfilter 9 und dem vor dem Luftfilter 9 im Ansaugkanal 2 gemessenen Atmosphärendruck AT gebildet. Übersteigt diese Differenz einen bestimmten Grenzwert, so ist davon auszugehen, daß das Luftfilter verschmutzt ist. Bei einer Überschreitung des vorgegebenen Grenzwertes für die Differenz zwischen dem Ansaugdruck AL und dem Atmosphärendruck AT steuert der Schaltblock 23 eine optische Signalanzeige 24 im Fahrzeug an.

Die zwei beschriebenen Begrenzungswerte QKG1 und QKG2 für die der Brennkraftmaschine zugemessene Kraftstoffmenge werden zusammen mit der Kraftstoffmengenvorgabe QK durch die Fahrpedalstellung einem Schaltblock 25 zur Minimalauswahl zugeführt. Die Kraftstoffmengenvorgabe QK wird in einem Schaltblock 26 in Abhängigkeit von der Motordrehzahl n und dem Ausgangssignal FP eines Fahrpedalstellungsgebers 27 erzeugt. Je nachdem welcher der drei Eingangswerte QKG1, QKG2 und QK des Schaltblocks 25 die geringste zuzumessende Kraftstoffmenge erfordert, danach orientiert sich das Ausgangssignal QK', das die Einspritzvorrichtung 12 der Brennkraftmaschine 1 steuert.

Die beschriebene Anordnung berücksichtigt also bei der Kraftstoffzumessung nicht nur ein Absinken des Atmosphärendrucks, sondern auch den Rauchausstoß als auch eine Verschmutzung des Luftfilters. Die drei genannten Schutzfunktionen verringern in sehr hohem Maße die Gefahr, daß der Turbolader durch eine überhöhte Drehzahl zerstört wird. Es müssen aber nicht in jedem Fall alle drei Schutzfunktionen zusammen eingesetzt werden.

## Patentansprüche

1. Verfahren zum Schutz eines Turboladers einer Brennkraftmaschine gegen Zerstörung durch eine überhöhte Laderdrehzahl, **dadurch gekennzeichnet, daß** aus einem vom Ladedruck (PL) von der Motordrehzahl (n) und von einer der Fahrpedalstellung (FP) entsprechenden Kraftstoffmengenvorgabe (QK) abhängigen Kennfeld (20) der Ansaugluftdruck (AL) des Laders (3, 5) hergeleitet wird und daß in Abhängigkeit von diesem Ansaugluftdruck (AL) ein Begrenzungswert (QKG1) für die der Brennkraftmaschine (1) zugemessene Kraftstoffmenge (QK') ermittelt wird.

2. Verfahren nach Anspruch 1, **dadurch gekennzeichnet, daß** aus einem vom Ladedruck (PL) und der Motordrehzahl (n) abhängigen Rauchbegrenzungskennfeld (22) ein zweiter Begrenzungswert (QKG2) für die Kraftstoffmenge (QK') ermittelt wird.

3. Verfahren nach Anspruch 1, **dadurch gekennzeichnet, daß** der Atmosphärendruck (AT) vor einem Luftfilter (9), das im Luftansaugkanal (2) vor dem Lader (3) angeordnet ist, gemessen wird, und daß die Differenz (DI) zwischen dem gemessenen Atmosphärendruck (AT) und dem Ansaugluftdruck (AL) gebildet wird, um eine Verschmutzung des Luftfilters (9) erkennen zu können.

4. Verfahren nach einem der vorhergehenden Ansprüche, **dadurch gekennzeichnet, daß** aus der Kraftstoffmengenvorgabe (QK) und mindestens einem der zwei aus dem Ansaugluftdruckkennfeld (21) und dem Rauchbegrenzungskennfeld (22) hergeleiteten Begrenzungswerten (QKG1, QKG2) eine Minimalauswahl (25) für die Kraftstoffmenge (QK') getroffen wird.

5. Vorrichtung zum Schutz eines Turboladers einer Brennkraftmaschine gegen Zerstörung durch eine überhöhte Laderdrehzahl, **dadurch gekennzeichnet, daß** ein Kennfeld (20) vorgesehen ist, aus dem in Abhängigkeit vom Laderdruck (PL), von der Motordrehzahl (n) und von einer der Fahrpedalstellung (FP) entsprechenden Kraftstoffmengenvorgabe (QK) der Ansaugluftdruck (AL) des Laders (3, 5) herleitbar ist, und daß Mittel (21) vorhanden sind, die in Abhängigkeit von dem Ansaugluftdruck (AL) einen Begrenzungswert (QKG1) für die der Brennkraftmaschine (1) zugemessene Kraftstoffmenge (QK') bestimmen.

6. Vorrichtung nach Anspruch 6, **dadurch gekennzeichnet, daß** ein Drucksensor (10) vorhanden ist, der den Atmosphärendruck (AT) vor einem Luftfilter (9), das im Luftansaugkanal (2) vor dem Lader (3) angeordnet ist, mißt, und daß Mittel (23, 24) vorhanden sind, welche die Differenz (DI) zwischen dem gemessenen Atmosphärendruck (AT) und dem Ansaugluftdruck (AL) bilden und bei einer einen Schwellwert übersteigenden Differenz (DI) eine Verschmutzung des Luftfilters (9) signalisieren.

## Claims

1. Method for protecting a turbocharger of an internal combustion engine against destruction as a result of an excessive charger rotational speed, **characterized in that** the intake-air pressure (AL) of the charger (3, 5) is derived from a characteristic diagram (20) as a function of the charging pressure (PL), of the engine rotational speed (n) and on a fuel-quantity stipulation (QK) corresponding to the accelerator-pedal position (FP), and **in that** a limit value (QKG1) for the fuel quantity (QK') metered to the internal combustion engine (1) is determined as a function of this intake-air pressure (AL).

2. Method according to Claim 1, **characterized in that** a second limit value (QKG2) for the fuel quantity (QK') is determined from a smoke-limitation characteristic diagram (22) dependent on the charging pressure (PL) and on the engine rotational speed (n).

3. Method according to Claim 1, **characterized in that** the atmospheric pressure (AT) upstream of an air filter (9) which is arranged in the air-intake duct (2) upstream of the charger (3) is measured, and **in that** the difference (DI) between the measured atmospheric pressure (AT) and the intake-air pressure (AL) is formed, so that a pollution of the air filter (9) can be detected.

4. Method according to one of the preceding claims, **characterized in that** a minimum selection (25) for the fuel quantity (QK') is made from the fuel-quantity stipulation (QK) and from at least one of the two limit values (QKG1, QKG2) derived from the intake-air pressure characteristic diagram (21) and the smoke-limitation characteristic diagram (22).

5. Device for protecting a turbocharger of an internal combustion engine against destruction as a result of an excessive charger rotational speed, **characterized in that** a characteristic diagram (20) is provided, from which the intake-air pressure (AL) of the charger (3, 5) can be derived as a function of the charging pressure (PL), of the engine rotational speed (n) and of a fuel-quantity stipulation (QK) corresponding to the accelerator-pedal position (FP), and **in that** there are means (21) which, as a function of the intake-air pressure (AL), determine a limit value (QKG1) for the fuel quantity (QK') metered to the internal combustion engine (1).

6. Device according to Claim 5, **characterized in that** there is a pressure sensor (10) which measures the atmospheric pressure (AT) upstream of an air filter (9) which is arranged in the air-intake duct (2) upstream of the charger (3), and **in that** there are means (23, 24) which form the difference (DI) between the measured atmospheric pressure (AT) and the intake-air pressure (AL) and, in the event of a difference (DI) exceeding a threshold value, signal a pollution of the air filter (9).

## Revendications

1. Procédé de protection d'un turbo compresseur d'un moteur à combustion interne contre la destruction par un sur-régime du compresseur,
**caractérisé en ce qu'**
à partir de la pression d'alimentation PL, du régime n du moteur et d'une quantité de consigne de carburant (QK) correspondant à la position de la pédale d'accélérateur FP, on détermine la pression de l'air aspiré AL du compresseur (3,5) en fonction d'un champ de caractéristique (20) et suivant cette pression de l'air aspiré AL, on détermine une valeur limite (QKG1) de la quantité de carburant (QK') à doser pour alimenter le moteur à combustion interne (1).

2. Procédé selon la revendication 1,
**caractérisé en ce qu'**
à partir d'un champ de caractéristique (22) limitant les fumées, dépendant de la pression d'alimentation (PL) et du régime (n) du moteur, on forme une seconde valeur limite (QKG2) de la quantité de carburant (QK').

3. Procédé selon la revendication 1,
**caractérisé en ce qu'**
on mesure la pression atmosphérique (AT) en amont d'un filtre à air (9) installé dans le canal d'admission d'air (2) en amont du compresseur (3) et on forme la différence (DI) entre la pression atmosphérique mesurée (AT) et la pression de l'air aspiré (AL) pour déceler l'encrassage du filtre à air (9).

4. Procédé selon Tune quelconque des revendication précédentes,
**caractérisé en ce qu'**
à partir de la consigne de carburant (QK) et d'au moins Tune des deux valeurs limites (QKG1), (QKG2) déduites du champ de caractéristique de la pression de l'air aspiré (21) et du champ de caractéristique limitant les fumées (22), on forme une sélection minimale (25) pour la quantité de carburant (QK').

5. Dispositif de protection d'un turbo compresseur d'un moteur à combustion interne contre sa destruction par le sur-régime du compresseur,
**caractérisé par**
un champ de caractéristique (20) à partir duquel, en fonction de la pression d'alimentation (PL), du régime du moteur (n) et d'une consigne de carburant (QK) correspondant à la position de la pédale d'accélérateur (FP), on déduit la pression de l'air aspiré (AL) du compresseur (3,5), et
des moyens qui, en fonction de la pression de l'air aspiré (AL) déterminent une valeur limite (QKG1) pour la quantité de carburant (QK') à doser pour alimenter le moteur à combustion interne (1).

6. Dispositif selon la revendication 5,
**caractérisé par**
un capteur de pression (10) qui mesure la pression atmosphérique (AT) en amont d'un filtre à air (9) installé dans le canal d'admission d'air (2) en amont du compresseur (3), et des moyens (23, 24) formant la différence (DI) entre la pression atmosphérique mesurée (AT) et la pression de l'air aspiré (AL) et qui signalent un encrassage du filtre à air (9) si cette différence (DI) dépasse un seuil.
